# EUROPÄISCHE PATENTANMELDUNG

(11) **EP 0 548 735 A1**
(43) Veröffentlichungstag der Anmeldung: **30.06.1993**
(21) Anmeldenummer: 92121282.5
(22) Anmeldetag: 15.12.1992
(51) Int. Cl.: B60C 9/22, B60C 9/30

(54) **Fahrzeugluftreifen mit unterschiedlichen Eigenschaften auf der Innen- und Aussenseite des Reifens am Fahrzeug**

(30) Priorität: 21.12.1991 DE 4142724
(71) Anmelder: Continental Aktiengesellschaft, D-30165 Hannover (DE)
(72) Erfinder: Glinz, Michael, W-3057 Neustadt 1 (DE); Baumhöfer, Johannes Josef, W-5100 Aachen (DE); Höfer, Alexander, W-5100 Aachen (DE); Walker, Hamisch, W-5100 Aachen (DE); Lorenz, Horst, W-5190 Stolberg (DE)

(57) **Zusammenfassung**

Die Erfindung bezieht sich auf einen Fahrzeugluftreifen mit einer Karkasse, einem Verstärkungsgürtel und einer Abdeckbandage und mit unterschiedlichen Eigenschaften auf der Innen- und Außenseite des Reifens am Fahrzeug. Um einen Fahrzeugluftreifen zu erhalten, bei dem zumindest im Bereich der beiden Gürtelränder unterschiedliche Reifeneigenschaften vorhanden sind, wird vorgeschlagen, daß die Abdeckbandage, die in Form einer durch Spulen von Streifenmaterial erzeugten Wickelbandage vorliegt, in den beiden Hälften links und rechts von der Mittelebene des Reifens unsymmetrisch aufgebaut ist.

## Beschreibung

Die Erfindung betrifft einen Fahrzeugluftreifen mit einer Karkasse, einem Verstärkungsgürtel und einer Abdeckbandage und mit unterschiedlichen Eigenschaften auf der Innen- und Außenseite des Reifens am Fahrzeug.

Fahrzeugluftreifen sind je nach ihrer Radposition unterschiedlichen Belastungen ausgesetzt, die sich insbesondere im Bereich der beiden Gürtelkanten äußern. So wird bei Kurvenfahrt der Schulterbereich auf der dem Fahrzeug abgewandten Seite des Fahrzeugluftreifens stärker belastet als auf der Innenseite. Somit ist es wünschenswert, im Bereich der äußeren Schulterkante eine zusätzliche Verstärkung vorzusehen. Bei Vorspur und größerer Reifenkonizität als negativem Sturz ergibt sich die schon beschriebene Asymmetrie der Belastung schon bei Geradeausfahrt. Es gibt bereits Reifen, bei denen der Gürtel asymmetrisch aufgebaut ist.

Der Erfindung liegt die Aufgabe zugrunde, einen Fahrzeugluftreifen anzugeben, bei dem zumindest im Bereich der beiden Gürtelränder unterschiedliche Reifeneigenschaften vorhanden sind.

Diese Aufgabe wird erfindungsgemäß dadurch gelöst, daß die Abdeckbandage, die in Form einer durch Spulen von Streifenmaterial erzeugten Wickelbandage vorliegt, in den beiden Hälften links und rechts von der Mittelebene des Reifens unsymmetrisch aufgebaut ist. Eine spezielle Lösung ist dadurch gegeben, daß die Wickelbandage derart aufgebaut ist, daß sie in der vom Fahrzeug abgekehrten Reifenhälfte eine größere Verstärkungswirkung ausübt.

Als Vorteil der Erfindung ist zu nennen, daß man zur Erzielung ungleicher Reifeneigenschaften auf der dem Fahrzeug zugewandten und abgewandten Seite des Reifens ausschließlich Maßnahmen an der Wickelbandage vornimmt. Alle übrigen Teile des Reifens können symmetrisch aufgebaut bleiben. Die Maßnahmen an der Wickelbandage lassen sich in einfacher Weise bei ihrer Herstellung durchführen, ohne daß es dabei zu erheblichen Zeitverzögerungen oder weiteren Arbeitsschritten kommt.

Nachfolgend werden mehrere Beispiele der Erfindung anhand einer Zeichnung näher erläutert.
Es zeigt
- Fig. 1: einen Fahrzeugluftreifen mit einer Wickelbandage radial außen vom Gürtel,
- Fig. 2 bis 8: einzelne Varianten der Wickelbandage nach Fig. 1,
- Fig. 9: Diagramm der Fadenspannung über der Gürtelbreite (schematisch).

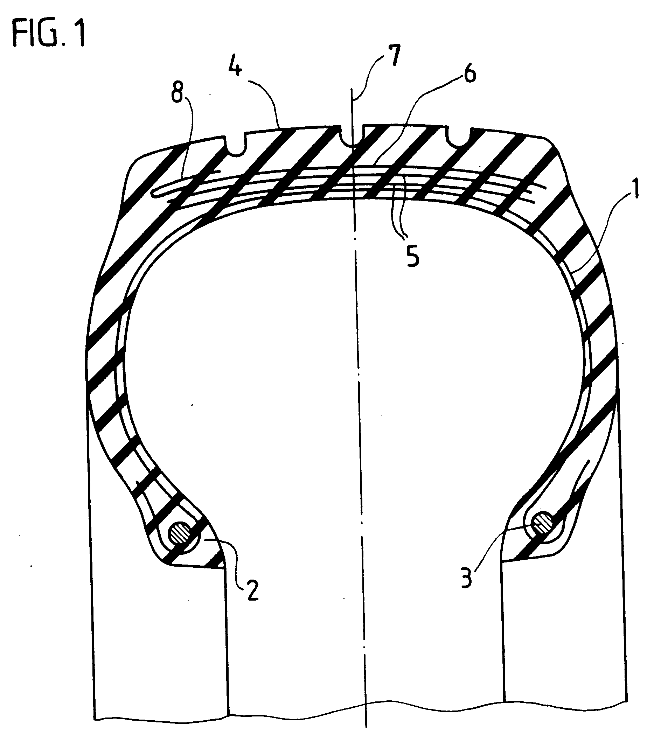

Der im wesentlichen aus Gummi oder gummiähnlichen Kunststoffen aufgebaute Fahrzeugluftreifen weist eine Karkasse, bevorzugt eine Radialkarkasse 1 auf, die in den Wülsten 2 durch Umschlingen von zugfesten Wulstkernen 3 verankert ist. Radial außen von der Radialkarkasse 1 befindet sich zwischen ihr und dem Laufstreifen 4 ein üblicher Verstärkungsgürtel 5, der z.B. aus zwei im Kreuzverband angeordneten Stahlcordlagen bestehen kann. Der Gürtel 5 ist radial außen von einer Abdeckbandage in Form einer Wickelbandage 6 umgeben, die den Gürtel 5 in seiner vollen Breite abdeckt. Die Wickelbandage 6 ist in bezug auf die Reifenmittelebene 7 unsymmetrisch aufgebaut, insbesondere ist sie im Bereich der Reifenaußenseite, d.h. der von einem Fahrzeug abgekehrten Reifenseite, verstärkt ausgebildet. Dieser Gürtelrandbereich ist in Fig. 1 mit 8 bezeichnet.

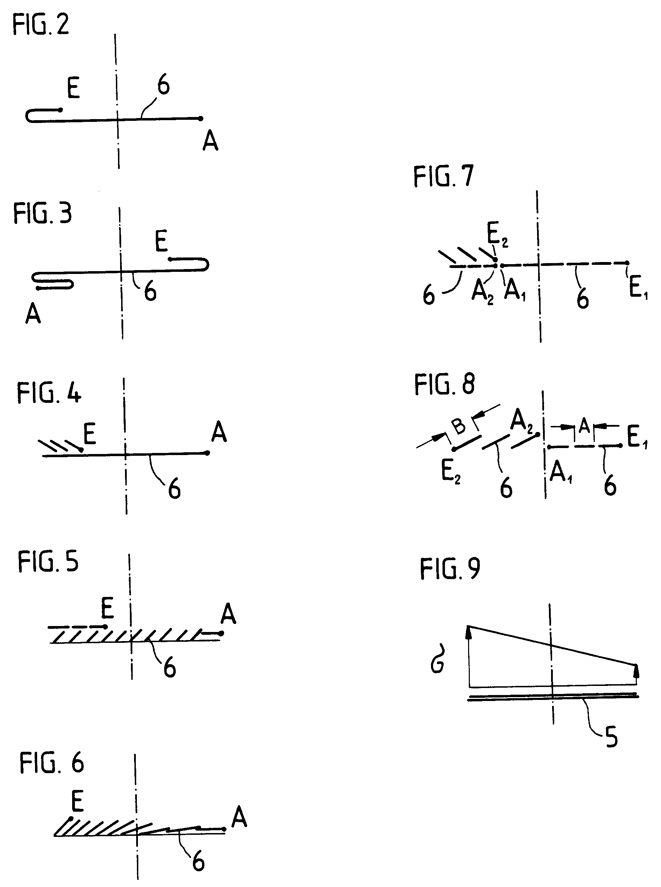

In den Fig. 2 bis 8 sind Einzelvarianten der Wickelbandage 6 nach Fig. 1 dargestellt. Die Wickelbandage wird durch Spulen eines üblichen Materialstreifens erzeugt, der z.B. aus gummiertem Nyloncord bestehen kann und eine Breite von bevorzugt 8 bis 25 mm aufweisen kann. Die Fadendichte liegt im Bereich von etwa 10 Fäden pro 1 cm Streifenbreite. Die Wickelbandagen 6 der Fig. 2 bis 6 werden mit Hilfe eines einzelnen Spulkopfes erzeugt, während in den Beispielen der Fig. 7 und 8 die Wickelbandage 6 mittels zweier Spulköpfe erzeugt wird. In den Beispielen der Fig. 2 bis 8 ist der Anfang der Wickelbandage 6 mit dem Buchstabe A bezeichnet, während der Buchstabe E das Ende der Bandage bedeutet. Eine durchgehende Linie soll andeuten, daß die aus einem Streifen gespulte Wickelbandage 6 mit dicht an dicht liegenden Windungen oder mit gerinfügigem Abstand zwischen benachbarten Windungen vorhanden ist.

Im Beispiel der Fig. 2 liegt der Anfang der Wickelbandage 6 im Bereich des einen Gürtelrandes. Die Bandage deckt die Gürtelbreite vollständig ab und ist dann vom anderen Ende des Gürtels über eine gewisse Breite zurückgeführt, so daß sich im Kantenbereich des zweiten Gürtelrandes eine doppelte Lagenabdeckung ergibt. In der beschriebenen Weise kann die vollständige Wickelbandage 6 in einem Arbeitsschritt erzeugt werden. Technisch ergibt sich selbstverständlich die gleiche Wirkung der Wickelbandage 6, wenn man in zwei Arbeitsschritten zunächst die sich über die gesamte Gürtelbreite erstreckende Lage erzeugt und dann im Gürtelrandbereich eine zweite Lage herstellt.

Das Beispiel der Fig. 3 unterscheidet sich von dem vorstehend Beschriebenen dadurch, daß eine Wickelbandage 6 mit drei Wirkungsbereichen erzeugt wird. So ergibt sich bei der dargestellten Wickelrichtung mit Wickelanfang und Wickelende eine Wickelbandage 6, die im linken Gürtelrandbereich dreilagig ausgebildet ist, während sie im Mittenbereich eine einzige Lage aufweist und im rechten Gürtelrandbereich zweilagig ausgebildet ist. Das Beispiel nach der Fig. 4 unterscheidet sich von dem der Fig. 2 dadurch, daß die in dem einen Kantenbereich vorhandene zusätzliche Lage aus sich überlappenden Windungen besteht. Auch diese Wickelbandage 6 läßt sich in der dargestellten Weise in einem einzigen Arbeitsschritt erzeugen. Im Beispiel der Fig. 5 ist umgekehrt die Wickelbandage 6 zunächst über die volle Gürtelbreite aus sich überlappenden Windungen hergestellt, während der zusätzlich im Bereich des einen Gürtelrandes vorhandene Teil aus dicht an dicht liegenden Windungen besteht. Im Beispiel der Fig. 6 besteht die Wickelbandage 6 über die volle Gürtelbreite aus sich überlappenden Windungen, wobei das Überlappungsmaß von einem Gürtelrand zum anderen zunimmt, bevorzugt kontinuierlich zunimmt.

Im Beispiel der Fig. 7 werden zwei Wickelbandagen 6 gleichzeitig mittels zweier Spulköpfe erzeugt. Die erste Bandage befindet sich im linken Gürtelrandbereich und besteht aus einer inneren Lage mit dicht an dicht liegenden Windungen und einer äußeren Lage mit sich überlappenden Windungen. Die übrige überwiegende Gürtelbreite ist von einer Wickelbandage bedeckt, die aus dicht an dicht liegenden Windungen gespult ist. Beim Beispiel der Fig. 8 werden ebenfalls mittels zweier Spulköpfe zwei Wickelbandagen 6 gleichzeitig erzeugt, wobei zur Erlangung unterschiedlicher Reifeneigenschaften in den beiden Reifenhälften zum einen unterschiedliche Streifenbreiten verwendet werden, zum anderen bei der Wickelbandage mit der Streifenbreite B die Windungen sich überlappend angeordnet sind, während bei der Wickelbandage mit der Streifenbreite A die Windungen dicht an dicht liegen. Auch hier wird in der linken Hälfte eine größere Verstärkungswirkung erreicht als in der rechten.

Außer mit den dargestellten Varianten kann man eine unterschiedliche Verstärkungswirkung in den beiden Hälften des Reifens auch dadurch erzeugen, daß man den Streifen einer Wickelbandage 6 mit unterschiedlicher Streifenspannung bzw. Fadenspannung auflegt. Dies wird in der Fig. 9 dadurch angedeutet, daß in einem schematischen Diagramm die Streifenspannung σ über der Breite des Gürtels 5 dargestellt wird. Hierbei nimmt die Streifenspannung von dem rechten Gürtelrand zum linken Gürtelrand kontinuierlich zu, so daß sich wiederum in der linken Reifenhälfte eine erhöhte Verstärkungswirkung ergibt.

## Patentansprüche

1. Fahrzeugluftreifen mit einer Karkasse, einem Verstärkungsgürtel und einer Abdeckbandage und mit unterschiedlichen Eigenschaften auf der Innen- und Außenseite des Reifens am Fahrzeug,
**dadurch gekennzeichnet,**
daß die Abdeckbandage, die in Form einer durch Spulen von Streifenmaterial erzeugten Wickelbandage (6) vorliegt, in den beiden Hälften links und rechts von der Mittelebene (7) des Reifens unsymmetrisch aufgebaut ist.

2. Fahrzeugluftreifen nach Anspruch 1, dadurch gekennzeichnet, daß die Wickelbandage (6) derart aufgebaut ist, daß sie in der vom Fahrzeug abgekehrten Reifenhälfte eine größere Verstärkungswirkung ausübt.

3. Fahrzeugluftreifen nach Anspruch 1 oder 2, dadurch gekennzeichnet, daß die Wickelbandage (6) durch Spulen eines Materialstreifens mit dicht an dicht liegenden Windungen erzeugt ist, daß der Anfang im Bereich des einen Gürtelrandes liegt, daß die Bandage nach Erreichen des anderen Gürtelrandes zurückgespult ist, so daß sich im Kantenbereich des anderen Gürtelrandes eine doppelte Lagenabdeckung ergibt.

4. Fahrzeugluftreifen nach Anspruch 1 oder 2, dadurch gekennzeichnet, daß die Wickelbandage (6) durch Spulen eines Materialstreifens mit dicht an dicht liegenden Windungen erzeugt ist und daß sich in dem einen Gürtelrandbereich drei Lagen, in der Gürtelmitte eine Lage und in dem anderen Gürtelrandbereich zwei Lagen der Bandage befinden.

5. Fahrzeugluftreifen nach Anspruch 1 oder 2, dadurch gekennzeichnet, daß die Wickelbandage (6) über die volle Gürtelbreite durch Spulen eines Materialstreifens mit dicht an dicht liegenden Windungen erzeugt ist und daß sich im Bereich des einen Gürtelrandes eine zusätzliche Kantenlage aus sich überlappenden Windungen befindet.

6. Fahrzeugluftreifen nach Anspruch 1 oder 2, dadurch gekennzeichnet, daß die Wickelbandage (6) über die volle Gürtelbreite aus sich überlappenden Windungen besteht und daß zusätzlich im Bereich des einen Gürtelrandes eine Kantenlage aus dicht an dicht liegenden Windungen vorhanden ist.

7. Fahrzeugluftreifen nach Anspruch 1 oder 2, dadurch gekennzeichnet, daß die Wickelbandage (6) über die volle Gürtelbreite aus sich überlappenden Windungen besteht und daß das Überlappungsmaß von einem Gürtelrand zum anderen zunimmt.

8. Verfahren zum Herstellen eines Reifens nach Anspruch 1 oder 2, dadurch gekennzeichnet, daß mittels zweier Spulköpfe zwei Wickelbandagen (6) gleichzeitig erzeugt werden, daß die erste in einem Kantenbereich des Gürtels zweilagig erzeugt wird, wobei die Windungen in der einen Lage dicht bei dicht und in der anderen Lage sich überlappend angeordnet sind, daß über den Rest der Gürtelbreite die zweite Bandage mit dicht an dicht liegenden Windungen gewickelt wird.

9. Verfahren zum Herstellen eines Reifens nach Anspruch 1 oder 2, dadurch gekennzeichnet, daß mittels zweier Spulköpfe zwei Wickelbandagen (6) gleichzeitig erzeugt werden, von denen die erste in der einen Hälfte der Gürtelbreite aus einem breiteren Materialstreifen mit sich überlappenden Windungen gewickelt wird und die zweite in der zweiten Hälfte der Gürtelbreite aus einem schmaleren Streifen mit dicht an dicht liegenden Windungen gewickelt wird.

10. Verfahren zum Herstellen eines Reifens nach Anspruch 1 oder 2, dadurch gekennzeichnet, daß der Materialstreifen der Wickelbandage (6) mit sich über die Breite des Gürtels ändernder Fadenspannung aufgespult wird.
